# EUROPEAN PATENT SPECIFICATION

(11) **EP 1 652 955 B1**
(45) Date of publication and mention of the grant of the patent: **27.05.2009**
(21) Application number: 05256732.8
(22) Date of filing: 31.10.2005
(51) Int. Cl.: C23C 4/12, H05H 1/42, F01D 5/28, F01D 5/00, B23P 6/00

(54) **Method for repairing thermal barrier coatings**
Verfahren zur Wärmdammschichtreparierungen
Procédé de réparation d'un Revêtement ayant des propriétés de barrière thermique.

(30) Priority: 29.10.2004 US 976969; 26.07.2005 US 190136; 19.10.2005 US 253868
(43) Date of publication of application: 03.05.2006
(73) Proprietor: United Technologies Corporation, Hartford, CT 06101 (US)
(72) Inventor: Zajchowski, Paul H., Enfield, CT 06082 (US); Blankenship, Donn R., Southbury, CT 06488 (US); Shubert, Gary, East Hampton, CT 06424 (US)
(74) Representative: Leckey, David Herbert

(56) References cited:
- EP-A- 0 808 913
- EP-A- 1 277 854
- US-A- 4 122 327
- US-A- 4 256 779
- US-A- 6 042 880
- US-A1- 2003 178 511

## Description

The present disclosure generally relates to spray coating methods and apparatus and, more particularly, relates to a method for repairing thermal barrier coatings using a microplasma spray device.

Plasma coating methods and apparatus are known. For example, one patent relates to a method and apparatus for plasma flame spray coating material onto a substrate. The patent discloses a method and apparatus for plasma flame spray coating material onto a substrate by means of passing a plasma forming gas through a nozzle electrode, and passing an arc forming current between the nozzle electrode and a rear electrode to form a plasma effluent. The method includes introducing coating material into the plasma effluent, passing the plasma effluent axially through a wall shroud extending from the exit of said nozzle electrode, and forming a flame shroud for the plasma effluent. The coating is thereby applied to the substrate.

One area where such technology is particularly advantageous is in connection with repairing thermal barrier coatings on various aircraft components, particularly gas turbine engines and their components. For example, thermal barrier coatings on turbine vanes and the like can become damaged due to a number of factors such as high operating stress, high cycle fatigue, and foreign object damage. Typically, repairing thermal barrier coatings require the component to be masked in areas where the material transfer is not required and/or not desired. For example, EP 0 808 913 discloses a method of repairing thermal barrier coatings in which such masking is used. Furthermore, the component typically must be removed from the engine and repaired in a dedicated facility such as an aircraft engine manufacturing plant or repair shop. Prior art methods and apparatus as disclosed for example in the European patent application EP 0 808 913 A require masking the component and repairing the thermal barrier coatings in dedicated facilities because the coating equipment is large and not portable and the spray pattern is too wide to accurately control the coating process. It would be desirable to improve the accuracy of spray coating devices so that masking and the like would not be required, as well as permitting hand spray coating repairs in the field of operation.

In accordance with the present invention, there is provided, a method of repairing a thermal barrier coating of as a gas turbine engine component as claimed in claim 1.

Other applications of the present invention will become apparent to those skilled in the art when the following description of a preferred embodiment of the invention is read in conjunction with the accompanying drawings.
Fig. 1 is a schematic representing a microplasma spray gun and a workpiece;
Fig. 2 is an exploded, perspective view of an exemplary a microplasma spray apparatus constructed in accordance with the teachings of the disclosure;
Fig. 3 is a perspective view of the microplasma spray apparatus of Fig. 1, applying a thermal barrier coating to a workpiece; and
Fig. 4 is a flowchart describing the process for applying thermal barrier coating with a microplasma spray device to a workpiece without masking.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the scope of the disclosure as defined by the appended claims.

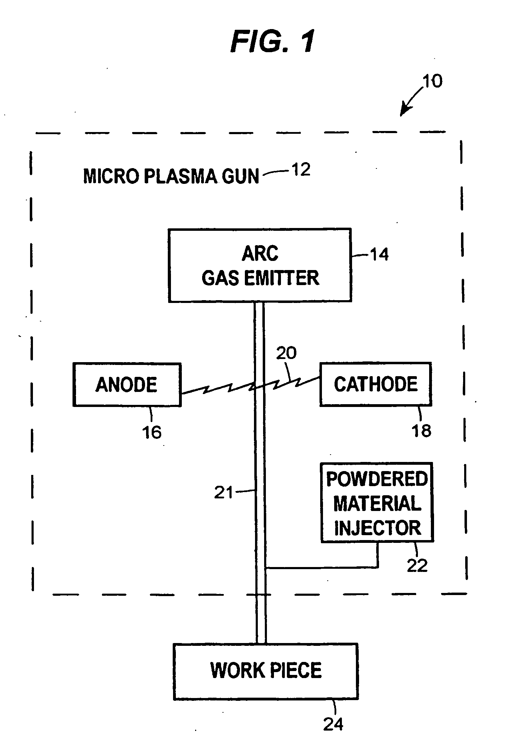

Referring now to Fig. 1, a microplasma spray apparatus 10 schematically represented by the dashed box outline is depicted. In generalized terms, the microplasma spray apparatus includes a microplasma gun 12 having an arc gas emitter 14, an anode 16, and a cathode 18. An electric arc 20 is generated between the anode 16 and cathode 18. A plasma stream 21 is formed when arc gas is injected from the arc gas emitter 14 through the arc 20. A powdered material injector 22 dispenses powdered thermal barrier coating material into the plasma stream which transports the powdered material to the workpiece 24. As a result, the powdered thermal barrier coating material can patch or repair defective areas of thermal barrier coating having a thickness of approximately 0.003 to 0.020 inches (0.076 to 0.5 mm) in a desired location on the workpiece 24.

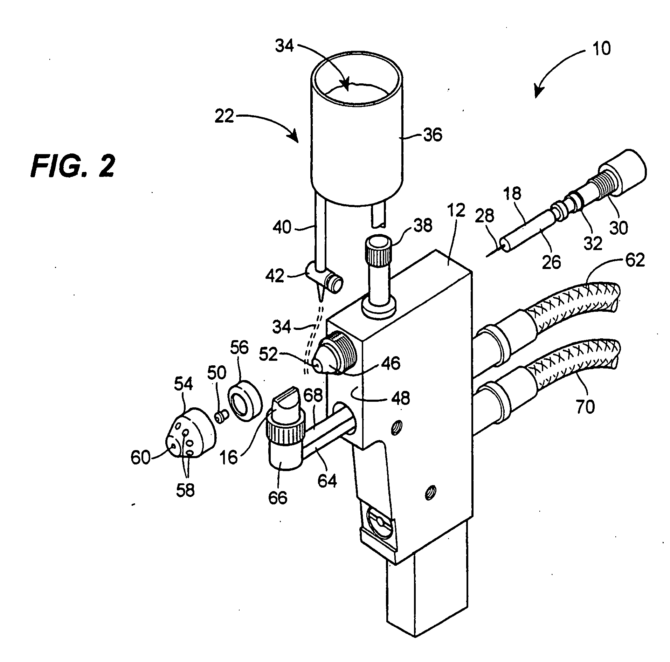

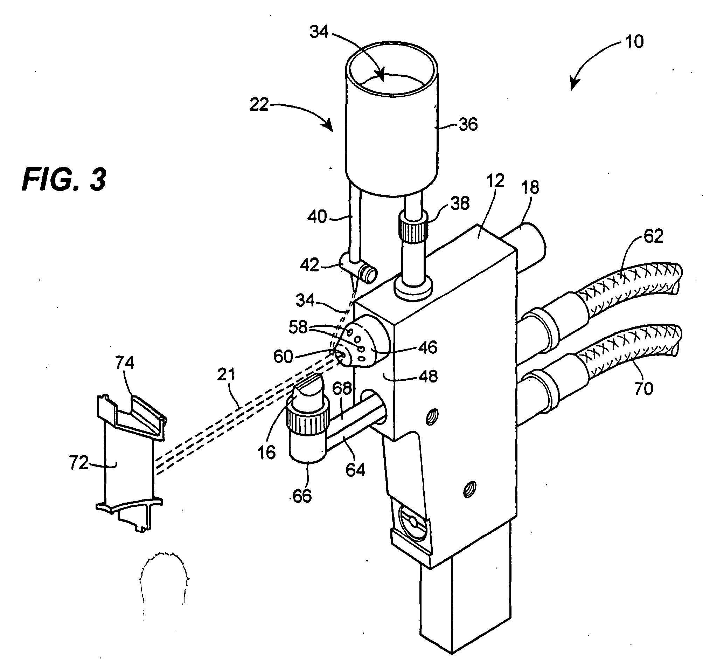

While a number of different embodiments and structural variations can be constructed to practice such an invention, the following describes one currently known embodiment. Referring now to Fig. 2, an exploded view of such a microplasma spray apparatus, is shown, again referred to by reference numeral 10. As will be described in detail below, the microplasma spray apparatus 10 is operable for repairing many things, including, but not limited to at least a portion of the thermal barrier coating of a component such as a turbine vane (see Fig. 3) in a gas turbine engine (not shown). However, it is to be understood that the teachings of the disclosure can be used to the repair thermal barrier coating on a myriad of other components, including combustor liners, turbine blades, and exhaust nozzles, etc. Further, these components can be associated with aircraft, land-based vehicles, weapons, sea-faring vessels and the like.

In the depicted embodiment, the microplasma spray apparatus 10 includes the aforementioned microplasma gun 12 having an anode 16 and a cathode 18. The cathode 18 is further depicted to include an insulated body 26 with an electrode 28 extending therefrom. The cathode 18 can include threads 30 for threadingly engaging the microplasma gun 12. The cathode 18 can also include an O-ring seal 32 to seal the leak path that is created at the interface between the cathode 18 and the microplasma gun 12.

In operation, an electric arc 20 (Fig. 1) is generated between the anode 16 and cathode 18 of the microplasma gun 12. Arc gas such as, but not limited to argon, is emitted into the electric arc formed between the anode 16 and the cathode 18. It should be understood that in practice the arc gas can be emitted prior to generating the electric arc. The electric arc ionizes the gas to create the plasma gas stream 21. The ionization process removes electrons from the arc gas, causing the arc gas to become temporarily unstable. The arc gas heats up to approximately 20,000°F to 30,000°F (11097°C to 16426°C)as it re-stabilizes. The plasma stream cools rapidly after passing through the electric arc.

A powdered material injector 22 injects powdered thermal barrier coating material 34 into the plasma gas stream 21. The powdered material 34 is heated and super plasticized in the plasma stream and is deposited on the turbine vane (see Fig. 3) where it cools and re-solidifies to form a thermal barrier coating. The powdered material injector 22 includes a powder hopper 36 for holding the powdered thermal barrier coating material 34. The hopper 36 is attached to the microplasma gun 12 via a connector 38 formed on the microplasma gun 12. The powder hopper 36 holds powdered thermal barrier coating material to be sprayed onto the turbine vane (see Fig. 3). The powdered material 34 is channeled through a discharge chute 40 and controlled by a valve 42 positioned in the discharge chute 40. The valve 42 can be mechanical or electromechanical as is known to those skilled in the art. Powder may also be injected into the plasma stream via a powder gas line from a standard powder feeder (not shown).

A nozzle shroud 46 positioned on a forward wall 48 of the microplasma gun 12 holds a nozzle insert 50 and permits the electrode 28 to extend through a center aperture 52 formed in the nozzle shroud 46. The nozzle insert 50 can be threadingly attached to an end of the nozzle shroud 46. A shield gas cap 54 is positioned adjacent the nozzle shroud 46. An insulator 56 is positioned between the shield gas cap 54 and the nozzle shroud 46 to electrically isolate the shield gas cap 54 from the nozzle shroud 46. The shield gas cap 54 can be pressed to fit onto the nozzle shroud 46 and over the insulator 56. The shield gas cap 54 includes a plurality of through apertures 58 for permitting shield gas to flow therethrough and shield the arc gas from ambient atmosphere. A center aperture 60 formed in the shield gas cap 54 permits high velocity arc gas to pass through and into the electric arc.

Cooling fluid, such as water or the like, is utilized to cool the microplasma gun 12. The cooling fluid is delivered to the microplasma gun 12 via a cooling fluid hose 62. The cooling fluid traverses through internal passages (not shown) in the microplasma gun 12 and flows through an inlet passage 64, into an anode holder 66 and back through an outlet passage 68. The cooling fluid reduces the temperature of the anode 16 during operation of the microplasma gun 12. The cooling flow rate may be approximately 0.1 to 1.0 gallons per minute (0.38 to 3.8 liters per minute). A second conduit 70 is connected to the microplasma gun 12. The second conduit 70 may be operable for providing electrical power, arc gas, and shield gas to the microplasma gun 12.

Referring now to Fig. 3, it is shown that a localized area of the turbine vane 72 having a defective area 74 of thermal barrier coating can be repaired by spray coating the area 74 with powdered thermal barrier coating material 34. The plasma gas stream 21 is directed toward the area 74 of the turbine vane 72 to be coated.

The microplasma gun 12 is operated at a relatively low power range of between approximately 0.5 Kilowatts and 4 Kilowatts. The low power output of the microplasma gun 12 significantly reduces the heat flow into the turbine vane 72 over that of conventional coating methods. The maximum surface temperature of the turbine vane 72 caused by the coating process is approximately 200°F (93°C). The microplasma gun 12 is operable for applying powdered thermal barrier coating material 34 to a thin wall area of the turbine vane 72 without distorting the turbine vane 72 because the low power output limits the localized stress caused by high thermal gradients.

The microplasma gun 12 can apply coating material in narrow strips of about 0.5 to about 5 mm in width. This permits accurate repair of thermal barrier coatings even with a hand held device. The narrow strips of coating substantially eliminate the need for masking or otherwise covering the turbine vane 72 in areas where the coating is unwanted. The narrow spray pattern is controlled by the nozzle opening size. The hand held version of the microplasma gun 12 is so accurate that coating can be sprayed on components while they remain installed in an engine or the like.

The arc gas flow rate of the microplasma apparatus 10 may be between approximately 0.5 and 3 liters per minute. As stated above, the arc gas and shield gas are typically argon, but any suitable inert gas can be utilized as is known to those skilled in the art. The shield gas flow rate ranges between approximately 2 and 8 liters per minute for a typical application. The thermal barrier coating material for the turbine vane 72 can be a dual layer metal-composite such as a "M" CrAlY bond layer and a stabilized zirconia base ceramic layer or any other suitable alloy combination operable for reducing heat transfer and protecting components having operating temperatures that are typically above 2000°F (1093°C).

The powder hopper 36 holds the powdered thermal barrier coating material 34 prior to being injected into the plasma gas stream 21 by the powder injector 22. The powdered thermal barrier coating material 34 can be injected into the plasma gas stream 21 either through gravity feed or through a pressurized system (not shown). The shut-off control valve 42 controls the powdered thermal barrier coating material 34 feed rate into the plasma gas stream 21. Powdered thermal barrier coating material 34 is transferred to the turbine vane 72 from between approximately 1 to 30 grams per minute. The microplasma gun 12 can typically apply the coating from distances ranging from approximately 1.5 inches to 8 inches (38 to 203 mm) to the turbine vane 72, but can vary depending on the coating application requirements. The microplasma spray gun 12 can be oriented between a positive 45° angle and a negative 45° angle relative to a normal axis of the turbine vane and still provide adequate material coating with a gravity feed system. A pressure feed system provides unlimited angles of orientation for the microplasma gun 12. The microplasma spray gun 12 generates a relatively low noise level that ranges from between 40 and 70 decibels due to the low power output, thereby making the apparatus 10 suitable for hand held application. Current U.S. government regulations require hearing protection when environmental noise reaches 85 decibels. The microplasma spray apparatus 10 is hand held.

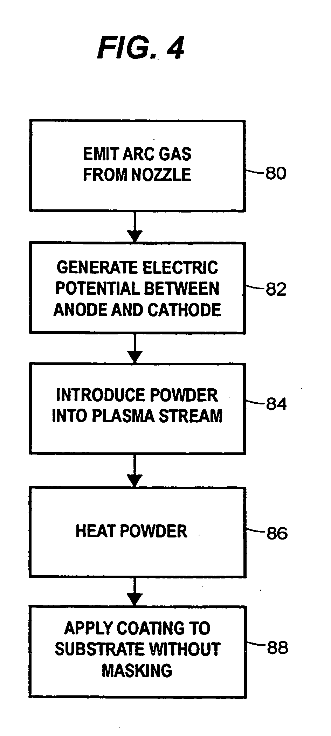

Referring now to Fig. 4, a block diagram generally describing the operation of the microplasma spray apparatus 10 and the plasma spray coating process is illustrated. Initially, at block 80, arc gas is emitted from the nozzle insert 50. An electric potential is generated between the anode 16 and the cathode 18 of the plasma spray gun 12 and is directed through the arc gas, as described in block 82. Arc gas is directed through the electric potential to create the plasma stream 21. At block 84, powdered thermal barrier coating material 34 is injected into the plasma stream 21. At block 86, the plasma stream heats the powdered material 34 to a "super plasticized" condition such that the powdered thermal barrier coating material 34 is malleable when it is applied to a workpiece. At block 88, the powdered thermal barrier coating material 34 is applied to an unmasked substrate. The powdered thermal barrier coating material 34 then cools and solidifies as a hard coating on the substrate.

## Claims

1. A method of repairing a thermal barrier coating of a gas turbine component using a microplasma spray coating apparatus whilst it remains installed in a gas turbine engine, comprising:
using a hand held and operated microplasma spray gun (12), which comprises an anode (16) and a cathode (18);
injecting inert are gas from a nozzle;
generating an electric arc (20) between the anode (16) and the cathode (18) through the arc gas;
ionizing the arc gas with the electric arc (20) to form a plasma gas stream (21);
injecting powdered thermal barrier coating material (34) onto the plasma gas stream (21); and
spray coating a localized area of the component with the powdered thermal barrier coating material without masking the component and without utilizing a dedicated spray coating facility.

2. The method of claim 1, further including patching a defective area of the thermal barrier coating without stripping the remaining non-defective thermal barrier coating on the component.

3. The method of claim 1 or 2, further including operating the microplasma gun (12) at a relatively low power range between approximately 0.5 Kilowatts and 4 Kilowatts.

4. The method of any preceding claim, further including applying the coating material (34) to the workpiece or component (72) without causing distortion of the workpiece.

5. The method of any preceding claim, wherein a maximum surface temperature of the workpiece or component (72) caused by the coating process is approximately 200 degrees F (93°C).

6. The method of any preceding claim, further including applying the coating material (34) to the workpiece or component (72) in narrow widths of about 0.5 to 5 mm.

7. The method of any preceding claim, further including flowing the arc gas at a rate between approximately 0.5 and 3 liters per minute.

8. The method of any preceding claim, wherein the arc gas is inert.

9. The method of any preceding claim, wherein the arc gas is argon.

10. The method of any preceding claim, further including flowing a shielding gas at a rate between approximately 2 and 8 liters per minute.

11. The method of claim 10, wherein the shielding gas is inert.

12. The method of claim 10 or 11, wherein the shielding gas is argon.

13. The method of any preceding claim, wherein the thermal barrier coating includes at least one layer of metal and ceramic based materials.

14. The method of claim 13, wherein the thermal barrier coating material includes a "M"CrAIY bond layer and a stabilized zirconia based ceramic top layer.

15. The method of any preceding claim, further including feeding the powder material (34) at a rate between approximately 1 and 30 grams per minute.

16. The method of any preceding claim, further including cooling the microplasma gun (12) with a fluid cooling system.

17. The method of claim 16, wherein the cooling fluid is at least partially water based.

18. The method of any preceding claim, further including applying the coating to the workpiece (72) from a distance of between approximately 1.5 to 8 inches (38 to 203 mm).

19. The method of any preceding claim, further including generating a noise level of between approximately 40 and 70 decibels during operation.

20. The method of any preceding claim, wherein the gas turbine component (72) is selected from the group consisting of: (i) a turbine blade; (ii) a turbine vane; (iii) a combustor liner; and (iv) an exhaust nozzle.

## Patentansprüche

1. Verfahren zur Reparatur einer Wärmebarrierebeschichtung eines Gasturbinen-Bauteils unter Verwendung einer Mikroplasmaspritzbeschichtungs-Vorrichtung während es in einer Gasturbinenmaschine eingebaut bleibt, aufweisend:
Verwenden einer tragbaren und handbetriebenen Mikroplasmaspritzapparatur (12), die eine Anode (16) und eine Kathode (18) aufweist;
Einspritzen von inertem Bogengas aus einer Düse;
Erzeugen eines elektrischen Bogens (20) zwischen der Anode (16) und der Kathode (18) durch das Bogengas;
Ionisieren des Bogengases mit dem elektrischen Bogen (20) zur Bildung eines Plasmagasstroms (21);
Einspritzen von pulverförmigem Wärmebarrierebeschichtungsmaterial (34) in den Plasmagasstrom (21); und
Spritzbeschichten eines festgelegten Bereichs des Bauteils mit dem pulverförmigen Wärmebarrierebeschichtungsmaterial ohne das Bauteil zu maskieren und ohne eine für eine Spritzbeschichtung bestimmte Anlage zu benutzen.

2. Verfahren nach Anspruch 1, außerdem umfassend ein Ausbessern eines beschädigten Bereichs der Wärmebarrierebeschichtung ohne die verbleibende nicht beschädigte Wärmebarrierebeschichtung auf dem Bauteil abzulösen.

3. Verfahren nach Anspruch 1 oder 2, außerdem umfassend ein Betreiben der Mikroplasmaspritzapparatur (12) in einem relativ niedrigen Leistungsbereich zwischen näherungsweise 0,5 kW und 4 kW.

4. Verfahren nach irgendeinem vorangehenden Anspruch, außerdem umfassend ein Auftragen des Beschichtungsmaterials (34) auf das Werkstück oder Bauteil (72) ohne eine Verformung des Werkstücks zu bewirken.

5. Verfahren nach irgendeinem vorangehenden Anspruch, bei dem eine maximale Oberflächentemperatur des Werkstücks oder des Bauteils (72), die durch den Beschichtungsprozeß verursacht wird, näherungsweise 200 °F (93 °C) beträgt.

6. Verfahren nach irgendeinem vorangehenden Anspruch, außerdem umfassend ein Auftragen des Beschichtungsmaterials (34) auf das Werkstück oder das Bauteil (72) in schmalen Breiten von etwa 0,5 bis 5 mm.

7. Verfahren nach irgendeinem vorangehenden Anspruch, außerdem umfassend ein Strömenlassen des Bogengases mit einer Geschwindigkeit zwischen näherungsweise 0,5 und 3 Litern pro Minute.

8. Verfahren nach irgendeinem vorangehenden Anspruch, bei dem das Bogengas inert ist.

9. Verfahren nach irgendeinem vorangehenden Anspruch, bei dem das Bogengas Argon ist.

10. Verfahren nach irgendeinem vorangehenden Anspruch, außerdem umfassend ein Strömenlassen eines Schutzgases mit einer Geschwindigkeit zwischen näherungsweise 2 und 8 Litern pro Minute.

11. Verfahren nach Anspruch 10, bei dem das Schutzgas inert ist.

12. Verfahren nach Anspruch 10 oder 11, bei dem das Schutzgas Argon ist.

13. Verfahren nach irgendeinem vorangehenden Anspruch, bei dem die Wärmebarrierebeschichtung mindestens eine Schicht aus Materialien auf Metall- und Keramikbasis aufweist.

14. Verfahren nach Anspruch 13, bei dem das Wärmebarrierebeschichtungsmaterial eine "M"CrAlY-Bindungsschicht und eine Keramik-Deckschicht auf der Basis von stabilisiertem Zirconiumdioxid aufweist.

15. Verfahren nach irgendeinem vorangehenden Anspruch, außerdem umfassend ein Zuführen des Pulvermaterials (34) mit einer Geschwindigkeit zwischen näherungsweise 1 und 30 Gramm pro Minute.

16. Verfahren nach irgendeinem vorangehenden Anspruch, außerdem umfassend ein Kühlen der Mikroplasmaspritzapparatur (12) mit einem Fluidkühlungssystem.

17. Verfahren nach Anspruch 16, bei dem das Kühlfluid mindestens teilweise auf Wasser basiert.

18. Verfahren nach irgendeinem vorangehenden Anspruch, außerdem umfassend ein Auftragen der Beschichtung auf das Werkstück (72) aus einer Entfernung von zwischen näherungsweise 1,5 bis 8 Zoll (38 bis 203 mm).

19. Verfahren nach irgendeinem vorangehenden Anspruch, außerdem umfassend ein Erzeugen eines Geräuschpegels von zwischen näherungsweise 40 und 70 Dezibel während des Betriebs.

20. Verfahren nach irgendeinem vorangehenden Anspruch, bei dem das Gasturbinenbauteil (72) ausgewählt wird aus der Gruppe, die besteht aus: (i) einer Turbinen-Laufschaufel; (ii) einer Turbinen-Leitschaufel; (iii) einer Brennerauskleidung; und (iv) einer Ausströmdüse.

## Revendications

1. Procédé consistant à réparer un revêtement de barrière thermique d'un composant de turbine à gaz en utilisant un appareil de revêtement par pulvérisation à microplasma alors qu'il reste installé dans un moteur de turbine à gaz, comprenant :
l'utilisation d'un pistolet de pulvérisation à microplasma tenu et actionné à la main (12), qui comprend une anode (16) et une cathode (18) ;
l'injection d'un gaz d'arc inerte à partir d'une buse ;
la création d'un arc électrique (20) entre l'anode (16) et la cathode (18) à travers le gaz d'arc ;
l'ionisation du gaz d'arc avec l'arc électrique (20) pour former un courant de gaz plasmagène (21) ;
l'injection d'un matériau de revêtement de barrière thermique en poudre (34) sur le courant de gaz plasmagène (21) ; et
le revêtement par pulvérisation d'une zone localisée du composant avec le matériau de revêtement de barrière thermique en poudre sans masquer le composant et sans utiliser d'installation dédiée de revêtement par pulvérisation.

2. Procédé selon la revendication 1, comprenant en outre la réparation d'une zone défectueuse du revêtement de barrière thermique sans décaper le revêtement de barrière thermique non défectueux restant sur le composant.

3. Procédé selon la revendication 1 ou 2, comprenant en outre le fonctionnement du pistolet à microplasma (12) dans une plage de puissance relativement faible comprise entre environ 0,5 kilowatt et 4 kilowatts.

4. Procédé selon l'une quelconque des revendications précédentes, comprenant en outre l'application du matériau de revêtement (34) sur la pièce de fabrication ou le composant (72) sans provoquer de perturbation de la pièce de fabrication.

5. Procédé selon l'une quelconque des revendications précédentes, dans lequel la température de surface maximale de la pièce de fabrication ou du composant (72) causée par le procédé de revêtement est d'environ 200 degrés F (93°C).

6. Procédé selon l'une quelconque des revendications précédentes, comprenant en outre l'application du matériau de revêtement (34) sur la pièce de fabrication ou le composant (72) en largeurs étroites d'environ 0,5 à 5 mm.

7. Procédé selon l'une quelconque des revendications précédentes, comprenant en outre l'écoulement du gaz d'arc à une vitesse comprise entre environ 0,5 et 3 litres par minute.

8. Procédé selon l'une quelconque des revendications précédentes, dans lequel le gaz d'arc est inerte.

9. Procédé selon l'une quelconque des revendications précédentes, dans lequel le gaz d'arc est l'argon.

10. Procédé selon l'une quelconque des revendications précédentes, comprenant en outre l'écoulement d'un gaz de protection à une vitesse comprise entre environ 2 et 8 litres par minute.

11. Procédé selon la revendication 10, dans lequel le gaz de protection est inerte.

12. Procédé selon la revendication 10 ou 11, dans lequel le gaz de protection est l'argon.

13. Procédé selon l'une quelconque des revendications précédentes, dans lequel le revêtement de barrière thermique comprend au moins une couche de métal et des matériaux à base de céramique.

14. Procédé selon la revendication 13, dans lequel le matériau de revêtement de barrière thermique comprend une couche d'accrochage en "M"CrAlY et une couche supérieure en céramique à base de zircone stabilisée.

15. Procédé selon l'une quelconque des revendications précédentes, comprenant en outre l'injection du matériau en poudre (34) à une vitesse comprise entre environ 1 et 30 grammes par minute.

16. Procédé selon l'une quelconque des revendications précédentes, comprenant en outre le refroidissement du pistolet à microplasma (12) avec un système de refroidissement liquide.

17. Procédé selon la revendication 16, dans lequel le réfrigérant est au moins partiellement à base d'eau.

18. Procédé selon l'une quelconque des revendications précédentes, comprenant en outre l'application du revêtement sur la pièce de fabrication (72) depuis une distance comprise entre environ 1,5 et 8 pouces (38 et 203 mm).

19. Procédé selon l'une quelconque des revendications précédentes, comprenant en outre la production d'un niveau de bruit compris entre environ 40 et 70 décibels en fonctionnement.

20. Procédé selon l'une quelconque des revendications précédentes, dans lequel le composant de turbine à gaz (72) est choisi dans le groupe constitué par : (i) une pale de turbine ; (ii) une aube de turbine ; (iii) une chemise de chambre de combustion ; et (iv) une tuyère d'échappement.
